# EUROPÄISCHE PATENTSCHRIFT

(11) **EP 2 582 486 B1**
(45) Veröffentlichungstag und Bekanntmachung des Hinweises auf die Patenterteilung: **27.08.2014**
(21) Anmeldenummer: 11723271.0
(22) Anmeldetag: 30.05.2011
(51) Int. Cl.: B23P 6/00, F01D 5/00, B23K 26/34, B23K 26/14, B23K 26/08

(54) **VERFAHREN ZUR REPARATUR VON ROTORSCHAUFELN**
METHOD FOR REPAIRING ROTOR BLADES
PROCÉDÉ DE RÉPARATION DE PALES DE ROTOR

(30) Priorität: 17.06.2010 DE 102010024083
(43) Veröffentlichungstag der Anmeldung: 24.04.2013
(73) Patentinhaber: Rolls-Royce Deutschland Ltd & Co KG, 15827 Blankenfelde-Mahlow (DE)
(72) Erfinder: NEBESNI, Josef, 61440 Oberursel (DE)
(74) Vertreter: Hoefer & Partner
(86) Internationale Anmeldenummer: PCT/EP2011/002671
(87) Internationale Veröffentlichungsnummer: WO 2011/157354

(56) Entgegenhaltungen:
- EP-A1- 0 496 181
- EP-A1- 0 558 053
- US-A1- 2008 173 624
- US-A1- 2008 182 017
- US-B1- 6 269 540

## Beschreibung

Die Erfindung betrifft ein Verfahren zur Reparatur von Rotorschaufeln einer Gasturbine, insbesondere eines Flugtriebwerks, bei dem der beschädigte Teil der Schaufelspitze entfernt wird und anschließend durch Laserauftragschweißen wieder aufgebaut und danach mechanisch fertigbearbeitet wird. Ein solches Verfahren ist aus US 6,269,540 bekannt.

Beim Laserauftragschweißen erfolgt ein Materialauftrag durch Aufschmelzen der Oberfläche des Werkstücks und gleichzeitiges Aufbringen eines in Pulverform oder als Schweißdraht vorliegenden Zusatzwerkstoffs. Die hochbeanspruchten und teueren Schaufeln eines Triebwerks, und zwar sowohl integral mit der Rotorscheibe verbundene Schaufeln als auch auf herkömmliche Art an der Rotorscheibe angebrachte separate Schaufeln, können bei Verschleiß und Beschädigung an den Schaufelspitzen kostengünstig durch Laserauftragschweißen repariert werden. Dabei wird zunächst der beschädigte oder verschlissene Teil an der Schaufelspitze mechanisch abgetragen. Anschließend wird die Schaufelspitze entlang dem Kantenverlauf bzw. etwa in Richtung der Rotationsachse der Rotorscheibe mit einem CO₂- oder Nd:YAG-Laser lokal aufgeschmolzen und dem aufgeschmolzenen Bereich ein mit einem inerten Gas gemischtes Metallpulver zugeführt, das sich mit der Grundmaterialschmelze vermengt. Auf diese Weise wird bis zum Erreichen der ursprünglichen Schaufeldimensionierung eine Materiallage nach der anderen entlang der Spitze der jeweiligen Rotorschaufel aufgetragen. Dieses Verfahren ist insofern nachteilig, als durch die separate Beschichtung jeder einzelnen Schaufel sehr viel Wärmeenergie in das Bauteil eingebracht wird und ein dementsprechend hoher Wärmeverzug der Schaufel auftritt. Die zur Durchführung des Verfahrens erforderlichen hohen Auftragsraten sind zudem mit einem hohen Aufwand für die mechanische Nacharbeit verbunden, und andererseits verringert sich mit einer höheren Schichtdicke des durch Laserauftragschweißen aufgebrachten Zusatzwerkstoff die Beanspruchbarkeit und die Härte der aufgetragenen Beschichtung.

Der Erfindung liegt die Aufgabe zugrunde, ein Verfahren zur Reparatur von an den Schaufelspitzen verschlissener oder beschädigter Rotorschaufeln durch Laserauftragschweißen anzugeben, das einen verminderten Arbeitsaufwand erfordert und reparierte Schaufeln in hoher Qualität zur Verfügung stellt.

Erfindungsgemäß wird die Aufgabe mit einem Verfahren gemäß den Merkmalen des Patentanspruchs 1 gelöst.

Zweckmäßige Ausgestaltungen der Erfindung sind Gegenstand des Unteranspruchs.

Der Grundgedanke der Erfindung besteht darin, dass das Laserauftragschweißen zum Wiederaufbauen der Schaufelspitzen nicht in einem kontinuierlichen Schweißprozess entlang der Schaufelkante erfolgt, sondern während einer taktweisen Rotation der an einer Rotorscheibe angebrachten Rotorschaufeln bei jedem Takt in nur einem punktuell begrenzten Abschnitt der jeweiligen Schaufelkante. Das heißt, gemäß dem erfindungsgemäßen Verfahren wird der Rotor mit den an diesem lösbar oder einstückig angebrachten Rotorschaufeln schrittweise gedreht und während des Stillstands des Rotors wird die jeweilige, gerade unter einer stationären Laserauftragschweißeinheit befindliche Rotorschaufel an der Schaufelspitze in einem begrenzten Bereich mit einem in einem bestimmten Zeitintervall erzeugten Laserstrahl erwärmt und aufgeschmolzen und mit einem in einem bestimmten Zeitintervall zugeführten Metallpulverstrom punktuell beschichtet. Dieser Vorgang wird nach jedem Umlauf der Rotorscheibe und jeweils einer Horizontalverstellung der Laserauftragsschweißeinheit so oft wiederholt, bis die Schaufelspitzen aller Rotorschaufeln über die gesamte Länge der Schaufelkanten und schließlich bis zur erforderlichen Schaufelhöhe, und zwar nachdem die Laserauftragsschweißeinheit für das Aufbringen einer weiteren Materialschicht zwischenzeitlich vertikal nach oben verstellt wurde, in einer Vielzahl von einzelnen Schweißschritten Punkt für Punkt und Schicht für Schicht punktuell beschichtet sind. Die Vorteile des Verfahrens bestehen in einem verminderten Zeitaufwand für die Reparatur von Rotorschaufeln und in den verbesserten tribologischen Eigenschaften des Schaufelmaterials im Bereich der reparierten und hochbeanspruchten Schaufelspitze.

In Ausgestaltung der Erfindung wird während des diskontinuierlichen, punktuellen Laserauftragschweißens kontinuierlich oder diskontinuierlich Schutzgas zugeführt.

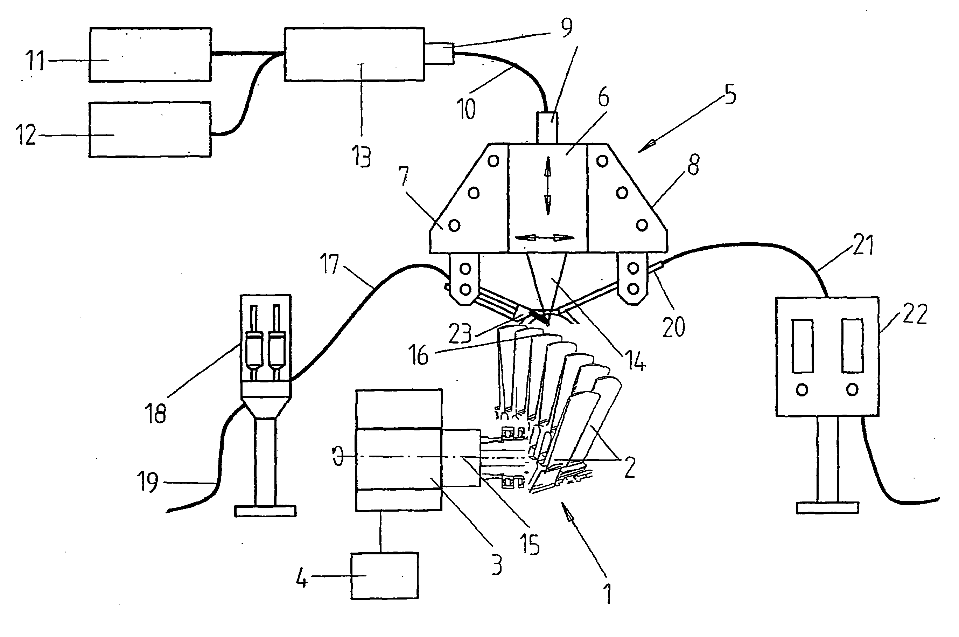

Ein Ausführungsbeispiel der Erfindung wird anhand der Zeichnung, deren einzige Figur eine Anordnung zur Reparatur der Spitzen von Rotorschaufeln eines Gasturbinentriebwerks wiedergibt, näher erläutert.

Ein Rotor 1 mit an dessen Umgang angebrachten Rotorschaufeln 2 ist mit einer Antriebsvorrichtung 3 verbunden, die den Rotor 1 mithilfe einer an die Antriebsvorrichtung 3 gekoppelten Steuerung 4 in eine schrittweise Drehbewegung versetzen kann. Der beschädigte bzw. verschlissene Teil der Schaufelspitzen wurde zuvor in einem mechanischen Bearbeitungsverfahren abgetragen. Die Beschichtung der so vorbereiteten Schaufeln 2 an den Schaufelspitzen 16 erfolgt durch Laserauftragschweißen mithilfe einer horizontal und vertikal verstellbar angeordneten Laserauftragschweißeinheit 5, die eine Laseroptik 6, einen Beschichtungskopf 7 und einen Schutzgaskopf 8 umfasst. Die Laseroptik 6 ist über Glasfaserstecker 9 und eine Glasfaser 10 an eine mit einer Laserkühlung 11 und einer Lasersteuerung 12 verbundene Lasereinheit 13 angeschlossen. Durch die Laseroptik 6 wird ein Laserstrahl 14 auf einen Punkt der sich etwa in Richtung der Drehachse 15 des Rotors 1 erstreckenden Schaufelspitze 16 gerichtet, die sich gerade unterhalb der Laseroptik 6 befindet.

Eine am Beschichtungskopf 7 befestigte Pulverdüse 23 ist über einen Pulvergasschlauch 17 an einen Pulverförderer 18 angeschlossen, der über einen Fördergasschlauch 19 mit einer Gasquelle (nicht dargestellt) verbunden ist. Das mit dem Gas geförderte Metallpulver wird über die Pulverdüse 23 dem vom Laserstrahl 14 an der Schaufelspitze 16 erzeugten Schmelzbad zugeführt, um so an der Schaufel- spitze einen etwa punktförmigen Materialauftrag zu bewirken. Eine am Schutzgaskopf 8 angebrachte, auf das Schmelzbad an der Schaufelspitze gerichtete Schutzgasdüse 20, die über eine Schutzgasleitung 21 mit in diese eingebundener Schutzgasvolumenstrommessvorrichtung 22 an eine Schutzgasquelle (nicht dargestellt) angeschlossen ist, sorgt für einen Materialauftrag in einer Schutzgasatmosphäre.

Während des Beschichtens der Schaufelspitzen 16 wird der Rotor 1 mit den an dessen Umfang angebrachten Schaufeln 2 schrittweise gedreht. Wenn sich eine Schaufelspitze im Ruhezustand unterhalb der Laseroptik 6 befindet, wird in einem bestimmten Zeitintervall ein Laserstrahl 14 erzeugt, der in einem begrenzten Bereich der betreffenden Schaufelspitze ein punktuelles Aufschmelzen bewirkt. Dem Schmelzbad wird - unter gleichzeitiger Schutzgaszufuhr - über die Pulverdüse 23 eine begrenzte Pulvermenge zugeführt. Unter taktweisem Drehen des Rotors werden auch die anderen Schaufelspitzen in der zuvor beschriebenen Art in einem punktuell begrenzten Bereich der jeweiligen Schaufelspitze beschichtet. Anschließend wird die Laserauftragschweißeinheit 5 horizontal verfahren und der dem zuvor beschichteten Bereich benachbarte Bereich der Schaufelspitze jeweils punktuell durch Laserauftragschweißen beschichtet. Dieser Vorgang wird solange wiederholt, bis über die gesamte Länge aller Schaufelspitzen eine durchgehende erste Materialschicht aufgebracht worden ist. Danach wird die Laserauftragschweißeinheit 5 vertikal nach oben verfahren und - wie zuvor beschrieben - werden weitere Schichten aufgebracht, und zwar bis die ursprüngliche und mit einem Aufmaß für eine nachfolgende spanenende Bearbeitung geeignete Schaufelhöhe erreicht ist.

Aufgrund der bei einer schrittweisen Drehbewegung durchgeführten - diskontinuierlichen, punktuellen - Beschichtung werden jeweils nur kleine Wärmeeinwirkzonen im Schaufelmaterial erzeugt. Die in die Schaufel eingebrachte geringe Wärmemenge minimiert das Verziehen des Werkstücks. Aus den jeweils kleinen Wärmeeinwirkzonen resultieren darüber hinaus steile Temperaturgradienten und demzufolge hohe Abkühlraten, die zu einer höheren Härte der aufgebrachten Materialschicht führen und somit ein besseres Reibungs- und Verschleißverhalten der Schaufeln zur Folge haben. Zudem wird der Zeitaufwand beim Laserauftragschweißen und bei der Nachbearbeitung der beschichteten Schaufeln verringert.

### Bezugszeichenliste

- 1: Rotor, Rotorscheibe
- 2: Rotorschaufeln
- 3: Antriebsvorrichtung
- 4: Steuerung von 3
- 5: Laserauftragschweißeinheit
- 6: Laseroptik
- 7: Beschichtungskopf
- 8: Schutzgaskopf
- 9: Glasfaserstecker
- 10: Glasfaser
- 11: Laserkühlung
- 12: Lasersteuerung
- 13: Lasereinheit
- 14: Laserstrahl
- 15: Drehachse von 1
- 16: Schaufelspitze
- 17: Pulvergasschlauch
- 18: Pulverförderer
- 19: Fördergasschlauch
- 20: Schutzgasdüse
- 21: Schutzgasleitung
- 22: Schutzgasvolumenstrommessvorrichtung
- 23: Pulverdüse

## Patentansprüche

1. Verfahren zur Reparatur von Rotorschaufeln einer Gasturbine, insbesondere eines Flugtriebwerks, bei dem der beschädigte Teil der Schaufelspitze entfernt wird und anschließend durch Laserauftragschweißen wieder aufgebaut und danach mechanisch fertigbearbeitet wird, **dadurch gekennzeichnet, dass** der Rotor (1) mit den an diesem lösbar oder einstückig angebrachten Rotorschaufeln (2) schrittweise gedreht wird und während des Stillstands des Rotors (1) die jeweilige, gerade unter einer stationären Laserauftragschweißeinheit (5) befindliche Rotorschaufel (2) an der Schaufelspitze (16) in einem begrenzten Bereich mit einem in einem bestimmten Zeitintervall erzeugten Laserstrahl (14) erwärmt und aufgeschmolzen und mit einem in einem bestimmten Zeitintervall zugeführten Metallpulverstrom punktuell beschichtet wird und auf diese Art die Schaufelspitzen (16) in Umfangsrichtung und schrittweise über ihre gesamte Länge und schließlich bis zur erforderlichen Schaufelhöhe punktuell beschichtet werden.

2. Verfahren nach Anspruch 1, **dadurch gekennzeichnet, dass** während des diskontinuierlichen, punktuellen Laserauftragschweißens kontinuierlich oder diskontinuierlich Schutzgas zugeführt wird.

## Claims

1. Method for repairing rotor blades of a gas turbine, in particular of an aircraft engine, where the damaged portion of the blade tip is removed and then reconstructed by laser cladding and finally finish-machined, **characterized in that** the rotor (1) with the rotor blades (2) fastened thereto detachably or in one piece is rotated step by step, and while the rotor (1) is stationary the respective rotor blade (2) currently underneath a stationary laser-cladding unit (5) is heated and melted at its tip (16) in a limited area using a laser beam (14) generated in a certain time interval, and coated point by point with a metal powder flow supplied in a certain time interval, and, by doing so, the blade tips (16) are coated, point by point in the circumferential direction and step by step, over the entire length and finally up to the necessary blade height.

2. Method in accordance with Claim 1, **characterized in that**, during discontinuous and point-by-point laser cladding, inert gas is supplied continuously or discontinuously.

## Revendications

1. Procédé destiné à réparer des aubes de rotor d'une turbine à gaz, en particulier d'un moteur d'avion, dans lequel la partie endommagée du bout d'aube est enlevée et ensuite reconstituée par rechargement au laser, puis finie mécaniquement, **caractérisé en ce que** le rotor (1) est tourné pas à pas avec les aubes de rotor (2) fixées de manière amovible audit rotor ou formées en une pièce avec ledit rotor, et que pendant l'arrêt du rotor (1), le bout d'aube (16) de l'aube de rotor (2) respective qui se trouve actuellement sous une unité stationnaire de rechargement au laser (5) est, dans une zone délimitée, chauffé et mis en fusion moyennant un rayon laser (14) généré dans un intervalle de temps défini, et est ponctuellement recouvert avec un flux de poudre métallique amené dans un intervalle de temps défini, et que de cette manière, les bouts d'aube (16) sont ponctuellement revêtus dans le sens circonférentiel et progressivement sur toute leur longueur et finalement jusqu'à la hauteur d'aube requise.

2. Procédé selon la revendication n° 1, **caractérisé en ce que** pendant le rechargement au laser discontinu et ponctuel, du gaz protecteur est amené de manière continue ou discontinue.
